(19) Europäisches Patentamt
European Patent Office
Office européen des brevets

(11) EP 1 364 914 A1

(12) EUROPEAN PATENT APPLICATION
published in accordance with Art. 158(3) EPC

(43) Date of publication:
**26.11.2003 Bulletin 2003/48**

(21) Application number: **02703884.3**

(22) Date of filing: **22.02.2002**

(51) Int Cl.[7]: **C02F 1/461**

(86) International application number:
**PCT/JP02/01598**

(87) International publication number:
**WO 02/068339 (06.09.2002 Gazette 2002/36)**

(84) Designated Contracting States:
**AT BE CH CY DE DK ES FI FR GB GR IE IT LI LU MC NL PT SE TR**

(30) Priority: **26.02.2001 JP 2001050728**
**26.02.2001 JP 2001050734**

(71) Applicant: **Sanyo Electric Co., Ltd.**
**Moriguchi-shi, Osaka 570-8677 (JP)**

(72) Inventors:
- **IKEGAMI, Kazuo**
  **Takatsuki-shi, Osaka 569-1024 (JP)**
- **HIRO, Naoki**
  **Osaka-shi, Osaka 536-0006 (JP)**
- **NAKAZAWA, Noriyuki**
  **Itabashi-ku, Tokyo 175-0083 (JP)**
- **ISEKI, Masahiro**
  **Ota-shi, Gunma 373-0852 (JP)**
- **YONESAKI, Takahiro**
  **Tatebayashi-shi, Gunma 374-0054 (JP)**
- **KANAI, Hiroshi**
  **Ota-shi, Gunma 373-0001 (JP)**
- **MUSHIAKE, Katsuhiko**
  **Shinjuku-ku, Tokyo 162-0055 (JP)**

(74) Representative: **Grey, Ian Michael et al**
**Venner, Shipley & Co,**
**20 Little Britain**
**London EC1A 7DH (GB)**

# (54) METHOD AND SYSTEM FOR TREATING NITROGEN-CONTAINING COMPOUND

(57) There is proposed a nitrogen treating method for nitrogen compounds which is capable of removing nitrogen compounds efficiently and achieving a downsizing of equipment and a decrease in costs. The nitrogen treating method is a method for treating nitrogen compounds in for-treatment water by an electrochemical process, wherein as a metal material which constitutes a cathode, a conductive material containing or covered with an element in the group Ib or IIb of the periodic table is used.

FIG. 1

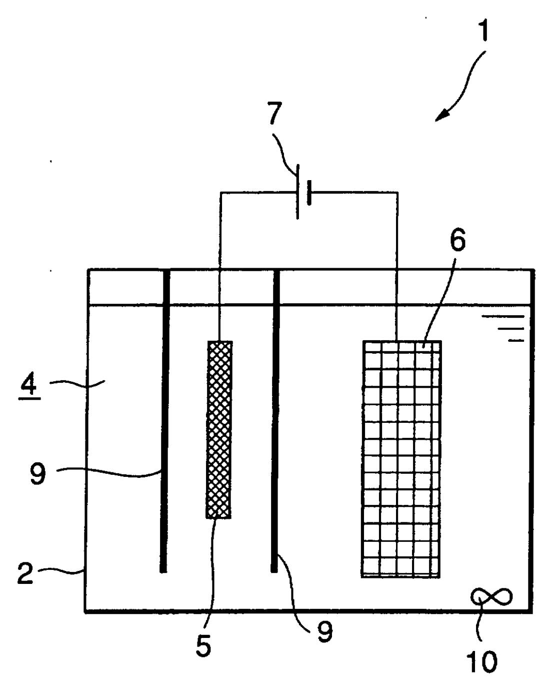




Printed by Jouve, 75001 PARIS (FR)

## Description

BACKGROUND OF THE INVENTION

Technical Field

The present invention relates to a nitrogen treating method and system for waste water which contains organic nitrogen, nitrite nitrogen, nitrate nitrogen, nitrate ions, ammonia nitrogen and ammonia.

Background Art

It has conventionally been well known that existence of nitrogen compounds is one of causes of eutrophication of rivers and lakes. It is also well known that the nitrogen compounds exist in domestic waste water and industrial waste water in large amounts and are difficult to purify. Heretofore, as a purification treatment for the nitrogen compounds, a biological treatment has been generally implemented. The biological treatment comprises two steps, i.e. a nitrification step for converting ammonia nitrogen to nitrate nitrogen and a denitrification step for converting nitrate nitrogen to nitrogen gas. Accordingly, there have been problems that two independent reaction vessels are required and that because the treatment proceeds slowly, its treatment efficiency is low.

Further, in the biological treatment, there has been another problem that a large-capacity anaerobic vessel is required for keeping denitrifying bacteria, thereby inducing increases in equipment construction cost and apparatus installation area. In addition, since the denitrifying bacteria are largely influenced by an ambient temperature environment, components contained in for-treatment water and the like, there has been another problem that particularly, during a winter season when the temperature is low, their activities are decreased so as to deteriorate a denitrifying effect, resulting in unstable processing efficiency.

Under such circumstances, to solve the foregoing technical problems, there has been proposed a method for converting ammonia, nitrite nitrogen or nitrate nitrogen through oxidation or reduction into nitrogen gas by passing a current through for-treatment water. In the method for treating for-treatment water through electrolysis, a metal material such as platinum, iridium or palladium or an oxide thereof is used in an anode. A current is passed through the for-treatment water so as to produce active oxygen or hypochlorous acid at the anode, and the nitrogen compound is caused to react with the active oxygen or hypochlorous acid so as to be converted into nitrogen gas. The method treats nitrogen compounds in such a manner.

Further, Japanese Patent Application Laid-Open No. 16844/1979 discloses a method for making organic waste water harmless by subjecting for-treatment water to electrolysis using an anode formed of platinum and a cathode formed of stainless steel.

However, in the case of the conventional methods for treating nitrogen compounds by electrolysis, since their capability of removing nitrogen compounds under conditions of dilute chloride ions is low, it has been actually difficult to treat nitrogen compounds in treatments of domestic waste water and industrial waste water by such methods. Further, there has been a problem that nitrate nitrogen remains as a nitrogen component in water and cannot be removed since it is not easily converted to nitrogen gas and low concentration nitrate ions are difficult to remove.

Under the circumstances, the present invention has been invented to solve the technical problems of the prior art and proposes a nitrogen treating method and system for nitrogen compounds which are capable of removing low concentration nitrogen compounds efficiently even under the conditions of dilute chloride ions and achieving a downsizing of equipment and a decrease in costs.

SUMMARY OF THE INVENTION

The present invention is a method for treating nitrogen compounds in for-treatment water by an electrochemical process, wherein as a metal material which constitutes a cathode, a conductive material containing or covered with an element in the group Ib or IIb of the periodic table is used.

Further, the present invention is a method for treating nitrogen compounds in for-treatment water by an electrochemical process, wherein a metal material which constitutes a cathode is a conductive material containing or covered with an element in the group Ib or IIb of the periodic table, and the for-treatment water contains halogen ions or a compound containing halogen ions.

Further, the present invention is a method for treating nitrogen compounds in for-treatment water by an electrochemical process, wherein a metal material which constitutes a cathode is a conductive material containing or covered with an element in the group Ib or IIb of the periodic table, and the for-treatment water contains chloride ions or a compound containing chloride ions.

Further, the nitrogen treating method of the present invention, in addition to the above nitrogen treating method, is characterized in that an amount of the chloride ions or chloride-ion-containing compound contained in the for-treatment water is not smaller than 10 ppm.

Further, the nitrogen treating methods of the present invention, in addition to the above inventions, are characterized in that as the metal material which constitutes the cathode, an alloy or sintered body comprising copper and zinc, copper and iron, copper and nickel, or copper and aluminum is used.

Further, the nitrogen treating methods of the present invention, in addition to the above inventions, are characterized in that between the cathode and an anode, a shielding member which prevents oxygen bubbles from passing therethrough, protects the anode from an influence of movement of the water and allows ions to pass therethrough is disposed.

Further, the nitrogen treating method of the present invention is characterized in that a conductive material which constitutes the anode is an insoluble material or carbon, and an area of the cathode is equal to or larger than an area of the anode.

Further, the nitrogen treating methods of the present invention, in addition to the above inventions, are characterized in that the for-treatment water is water treated in a biological process purifying vessel.

A nitrogen treating system of the present invention is a system in which a nitrogen treating apparatus for treating nitrogen compounds in for-treatment water by the nitrogen treating method of any of the above inventions is disposed subsequently to a biological process purifying vessel.

## BRIEF DESCRIPTION OF THE DRAWINGS

Fig. 1 is an explanatory diagram showing an outline of a nitrogen treating apparatus for implementing a nitrogen treating method of the present invention;
Fig. 2 is a diagram for explaining a constitution of an anode;
Fig. 3 is a diagram showing reducing capabilities of cathodes comprising different types of metals.
Fig. 4 is a diagram showing reducing capabilities of cathodes comprising different types of copper alloys.
Fig. 5 is a diagram showing a change in concentration of $NO_3^-$ when potassium chloride is added to for-treatment water.
Fig. 6 is a diagram for explaining a first specific application example of the present invention;
Fig. 7 is a diagram for explaining a second specific application example of the present invention;
Fig. 8 is a diagram for explaining a third specific application example of the present invention; and
Fig. 9 is a diagram for explaining a fourth specific application example of the present invention.

## DETAILED DESCRIPTION OF THE PREFERRED EMBODIMENT

Hereinafter, embodiments of the present invention will be described in detail with reference to the accompanying drawings. A nitrogen treating apparatus 1 in the present embodiment comprises a treating vessel 2 which constitutes a treating chamber 4, the chamber 4 having a waste water inlet and a waste water outlet which are not shown; an anode 5 and a cathode 6 which are a pair of electrodes disposed confronting each other such that at least portions thereof are immersed in for-treatment water in the treating chamber 4; a power supply 7 for energizing the anode 5 and the cathode 6; and a not-shown controller for controlling the electrode 7. In Fig. 1, numeral 10 denotes an agitating bar as agitation means for agitating the for-treatment water in the treating vessel 2.

The cathode 6 is formed of a conductive material containing or covered with an element in the group Ib or IIb of the periodic table, such as an alloy or sintered body of copper and zinc, of copper and iron, of copper and nickel, or of copper and aluminum, while the anode 5 is an insoluble electrode which contains insoluble metal such as platinum, iridium, palladium or an oxide thereof or is made of carbon.

Further, a shielding member 9 is provided between the anode 5 and the cathode 6 in cylindrical form as shown in Fig. 2 such that it surrounds the anode 5. The shielding member 9 is formed of a non-conductive member such as glass fiber meshes or plastic meshes and prevents oxygen bubbles generated from the anode 5 from moving toward the cathode 6. In this case, ions present around the anode 5 can pass through the shielding member 9 and move toward the cathode 6. Further, the shielding member 9 prevents agitation caused by movement of for-treatment water or the agitating bar 10 from influencing the anode 5.

With the arrangement described above, for-treatment water containing nitrate nitrogen is reserved in the treating chamber 4 in the treating vessel 2, and the controller turns on the power supply 7, thereby energizing the cathode 6 and the anode 5. Thereby, on the cathode 6 side, nitrate ions contained in the for-treatment water are converted to nitrite ions through a reduction reaction (reaction A). Then, the nitrite ions produced through the reduction reaction of the nitrate ions are further converted to ammonia through a reduction reaction (reaction B). The reactions A and B are

shown below.

Reaction A $NO_3^- + H_2O + 2e^- \rightarrow NO_2^- + 2OH^-$

Reaction B $NO_2^- + 5H_2O + 6e^- \rightarrow NHL_3\ (aq) + 7OH^-$

Meanwhile, on the anode 5 side, active oxygen and hypochlorous acid are generated from the surface of the anode 5. As a result, ammonia in the for-treatment water is oxidized to produce nitrogen gas (reaction C). The reaction C is shown below.

Reaction C $NH_3(aq) + 3(O) \rightarrow N_2\uparrow + 3H_2O$

Thereby, nitrogen compounds such as nitrate nitrogen, nitrite nitrogen and ammonia nitrogen in the for-treatment water can be treated in the same treating vessel 2.

Next, with reference to Figs. 3 and 4, an electrode constituting the cathode 6 will be described. In electrolysis in actual nitrogen treatment, a nitrogen treating capability of the cathode 6 significantly varies, particularly according to the type of metal which constitutes the cathode 6. Fig. 3 is a diagram showing reducing capabilities of cathodes comprising different types of metals. Experimental results shown in Fig. 3 show concentrations of $NO_3^-$ with time when 300 ml of solutions containing 0.001 M of $KNO_3$ were electrolyzed in the absence of chloride ions. At this time, platinum is used as the anode 5, and an area ratio of the cathode 6 to the anode 5 is 10:1.

As shown in Fig. 3, when the cathode 6 is formed of a conductive material containing an element in the group Ib or IIb of the periodic table, such as zinc, copper, silver or brass which is an alloy of zinc and copper, the capability of the cathode 6 to reduce nitrate nitrogen, i.e., low concentration $NO_3^-$, is significantly high. Meanwhile, under the same conditions, platinum, nickel and titanium hardly exhibited a reducing capability. Accordingly, it is understood that when the cathode 6 comprises a conductive material containing an element in the group Ib or IIb of the periodic table, it is effective in treating $NO_3^-$ and $NO_2^-$.

Further, Fig. 4 is a diagram showing reducing capabilities of cathodes comprising different types of copper alloys. Experimental results shown in Fig. 4 show the results of experiments carried out under the same conditions as the experiments whose results are in Fig. 3. As shown in Fig. 4, when Advance which is an alloy of copper, nickel and manganese, a phosphor bronze which is an alloy of copper and tin or a cupronickel which is an alloy of copper and nickel is used in the cathode 6, a decrease rate of $NO_3^-$ is low as compared with the foregoing case where metal such as zinc is solely used in the cathode 6.

As can be understood from the above description, in the absence of chloride ions or in the presence of dilute chloride ions, a copper/zinc alloy, a copper/nickel alloy and a copper/aluminum alloy are effective in treating $NO_3^-$ and $NO_2^-$. Further, it is also understood that when a copper alloy containing manganese or tin is used in the cathode 6, the capability of the cathode 6 to reduce low concentration $NO_3^-$ and $NO_2^-$ is significantly degraded, regardless of the content of manganese or tin in the alloy. Furthermore, in addition to copper alloys, a sintered body of copper and iron exhibits a high reducing capability.

Thus, when an alloy of copper and zinc is used in the cathode 6, particularly, reduction reactions of nitrate nitrogen in the for-treatment water to nitrite nitrogen and ammonia nitrogen can be accelerated, so that a time required for the reduction reactions can be shortened, as compared with a case where zinc or copper is solely used in the cathode 6 as has conventionally been done. In the case of copper, when the solution becomes alkaline as the electrolysis proceeds, reductions of $NO_3^-$ and $NO_2^-$ slow down. However, in the case of brass which is an alloy of copper and zinc, since zinc having a stronger ionization tendency than copper serves as a sacrificial electrode, the rates of the reductions of the nitrogen compounds do not depend on the pH of the solution, so that the reducing capability of the cathode 6 is improved as compared with the case where copper or zinc is solely used in the cathode 6.

Therefore, nitrogen compounds contained in for-treatment water discharged from ordinary households, factories and the like can be removed from the for-treatment water efficiently, and efficiency of treatment of the nitrogen compounds is increased.

Particularly, when brass is used in the cathode 6, the concentration of $NO_3^-$ can be significantly reduced. Thereby, the reduction reactions of nitrate nitrogen in the for-treatment water to nitrite nitrogen and ammonia can be further accelerated, so that the time required for the reduction reactions can be shortened, and low concentration nitrate ions can also be reduced.

Meanwhile, at the anode 5, in addition to the foregoing denitrification reaction, an oxidation reaction in which nitrite ions resulting from reduction of nitrate ions at the cathode 6 are oxidized to nitrate ions again occurs. Thus, since the oxidation reaction (reaction D) of nitrate ions occurs at the anode 5 against the reduction reaction of nitrate ions at the cathode 6, there is a problem that nitrogen treatment efficiency deteriorates. The reaction D is shown below.

Reaction D $$NO_2^- + H_2O \rightarrow NO_3^- + H^+ + + 2e^-$$

Therefore, in the present invention, to delay the oxidation reaction of nitrite ions which occurs at the anode 5 and accelerate the reduction reaction of nitrate ions which occurs at the cathode 6, a cathode having a surface area equal to or larger than that of the anode 5 is used as the cathode 6.

Thereby, the oxidation reaction occurring at the anode 5 of a nitrogen compound, particularly nitrite nitrogen, i.e., nitrite ions, to nitrate nitrogen, i.e., nitrate ions can be reduced, and the reduction reaction of nitrate ions which occurs at the cathode 6 can be accelerated.

Further, in the nitrogen treating apparatus 1 in this example, as described above, the shielding member 9 is provided between the anode 5 and the cathode 6 so as to surround the anode 5. Thereby, it can be prevented that active oxygen generated from the surface of the anode 5 moves to the cathode 6 and interferes with the reduction reaction at the cathode 6.

Further, since only ions can pass through the shielding member 9, nitrate nitrogen, i.e., nitrate ions can move from the anode 5 to the cathode 6 by passing through the shielding member 9 so as to be subjected to the reduction reaction at the cathode. Thereby, the reduction reaction of the nitrate ions can be accelerated.

Further, since the shielding member 9 which protects the anode 5 from an influence of moving water and allows ions to pass therethrough is disposed, the shielding member 9 prevents for-treatment water around the anode 5 from being agitated when the reduction reaction of nitrate nitrogen at the cathode 6 is accelerated by agitation caused by movement of for-treatment water or the agitating bar 10 and promotes feeding of dilute chloride ions to the anode 5 by electrophoresis. As a result, treatment of nitrogen compounds by hypochlorous acid is improved.

Still further, as described above, the shielding member 9 is formed in a cylindrical form, opens downwardly and surrounds the anode 5 completely. Accordingly, $NO_3^-$ is attracted to the anode 5 aggressively and does not move to the cathode 6, whereby a reduction in efficiency of the reduction reaction of $NO_3^-$ can be prevented from occurring. Thereby, the reduction reaction of nitrate nitrogen can be further accelerated, and efficiency of treatment of the nitrogen compounds can be improved.

Further, when halogen ions such as chloride ions. iodine ions or bromine ions or compounds containing these halogen ions such as sodium chloride and potassium chloride are added to for-treatment water, $NH_4^+$ can be removed efficiently, and efficiency of treatment of the nitrogen compounds can be improved.

Further, Fig. 5 is a diagram showing a change in concentration of $NO_3^-$ when potassium chloride is added to for-treatment water. Referring to Fig. 5, as compared with a case where potassium chloride is not added, $NO_3^-$ is significantly decreased and its concentration is lowered in a short time. Accordingly, since ammonia generated from the cathode 6 causes a denitrification reaction with a substance generated from the anode 5 such as hypochlorous acid, nitrogen components such as nitrate nitrogen, ammonia nitrogen and nitrogen compounds can be removed efficiently due to a synergistic effect. Therefore, nitrogen compounds contained in for-treatment water discharged from ordinary households, factories and the like can be removed from the for-treatment water efficiently, and efficiency of treatment of the nitrogen compounds is increased.

Further, the concentration of halogen ions such as chloride ions, iodine ions or bromine ions or compounds containing these halogen ions such as sodium chloride and potassium chloride to be added may be, for example, not lower than 10 ppm. Thereby, the nitrogen components such as nitrate nitrogen, ammonia nitrogen and nitrogen compounds can be removed more efficiently due to a synergistic effect.

Particularly, when sodium chloride is added to the for-treatment water, maintenance and addition of the additive can be easily carried out since it is stable and safe as an additive. Further, when for-treatment water containing sea water is subjected to nitrogen treatment, nitrogen components can be removed effectively without especially adding an additive to the for-treatment water since sodium chloride is contained in the sea water in a large amount, e.g., not smaller than 4,000 ppm.

When an additive is used, efficiency of removal of nitrogen compounds is significantly increased. For this reason, the anode 5 and the cathode 6 can have the same size of area. Thereby, the constitution of the nitrogen treating appratus 1 for implementing the present invention can be simplified, and a downsizing of the apparatus becomes possible.

Further, in a first specific application example of the present invention, for-treatment water is reserved in a biological process purifying vessel, i.e., a so-called activated sludge process vessel 11 in the present example as shown in Fig. 6, and after COD and BOD are removed in the activated sludge process vessel 11, the for-treatment water subjected to the COD and BOD process is introduced into the treating vessel 2 of the nitrogen treating apparatus 1 to which the present invention is applied so as to treat nitrogen compounds.

Thus, since the nitrogen compounds can be treated in the nitrogen treating apparatus 1 after the for-treatment water is subjected to the COD and BOD process in the activated sludge process vessel 11, the for-treatment water can be treated effectively. Further, although the for-treatment water processed in the activated sludge process vessel 11 contains bacteria generated in the activated sludge process vessel 11, the for-treatment water is sterilized with hypochlorous acid or active oxygen in the nitrogen treating apparatus 1 as described above, so that the treated water can be discharged in the state suitable for environment.

Further, in a second specific application example of the present invention, floating substances in for-treatment water can be removed based on so-called electrolytic surfacing as shown in Fig. 7.

Still further, in a third specific application example of the present invention, the nitrogen treating apparatus 1 can be used for removing nitrogen compounds contained in water reserved in a water vessel 12 where fishes are kept in a fish preserve, aquarium or the like, as shown in Fig. 8. Since the water in the water vessel where fishes are kept is significantly contaminated with nitrogen compounds such as ammonia discharged from the fishes, the water in the water vessel needs to be exchanged regularly. For this reason, the water in the water vessel 12 which contains nitrogen compounds is introduced into the nitrogen treating apparatus 1 so as to treat the nitrogen compounds, the treated water discharged from the nitrogen treating apparatus 1 is then introduced into a hypochlorous acid removing apparatus 13 so as to remove hypochlorous acid in the treated water, and the resulting treated water is returned to the water vessel 12.

Thereby, there is no need to exchange the water in the water vessel 12 regularly, so that the maintenance workability of the water vessel 12 can be improved. Further, the treated water reserved in the nitrogen treating apparatus 1 is sterilized by hypochlorous acid before returned to the water vessel 12, whereby the survival rate of fishes in the water vessel 12 can be improved.

In addition, in a fourth specific application example of the present invention, NOx gas in the air is dissolved in water using a photocatalyst or scrubber so as to form a nitric acid aqueous solution as shown in Fig. 9. Then, this nitric acid aqueous solution is introduced into the nitrogen treating apparatus 1 to which the present invention is applied so as to remove nitrogen. This can prevent such a situation that NOx gas is dissolved in water so as to form a nitric acid aqueous solution which is then drained into the soil to highly acidify the soil. Thus, the soil which has become acid can be kept neutral without using an agent.

In addition to the foregoing, the nitrogen removing method to which the present invention is applied can also be applied to purification of for-treatment water in swimming pools or baths, or purification of well water or underground water, or the like.

As described above, a nitrogen treating method of the present invention is a method for treating nitrogen compounds in for-treatment water by an electrochemical process, wherein as a metal material which constitutes a cathode, a conductive material containing or covered with an element in the group Ib or IIb of the periodic table is used. Accordingly, reduction reactions of nitrate nitrogen in the for-treatment water to nitrite nitrogen and ammonia can be accelerated, so that a time required for the reduction reactions can be shortened.

Further, a nitrogen treating method of the present invention is a method for treating nitrogen compounds in for-treatment water by an electrochemical process, wherein a metal material which constitutes a cathode is a conductive material containing or covered with an element in the group Ib or IIb of the periodic table, and the for-treatment water contains halogen ions or a compound containing halogen ions. Accordingly, reduction reactions of nitrate nitrogen in the for-treatment water to nitrite nitrogen and ammonia can be further accelerated, so that a time required for the reduction reactions can be shortened.

Further, according to the present invention, in addition to the above invention, an amount of the chloride ions or chloride-ion-containing compound contained in the for-treatment water is not smaller than 10 ppm. Accordingly, ammonia generated from the cathode is caused to have a denitrification reaction with a substance generated from an anode such as hypochlorous acid by use of a compound which is relatively easy to use, so that nitrogen components such as nitrate nitrogen, ammonia nitrogen and nitrogen compounds can be removed further efficiently by a synergistic effect.

Further, according to the present invention, in addition to the above inventions, as the metal material which constitutes the cathode, an alloy or sintered body comprising copper and zinc, copper and iron, copper and nickel, or copper and aluminum is used. Therefore, particularly, the reduction reactions of nitrate nitrogen in the for-treatment water to nitrite nitrogen and ammonia can be further accelerated, so that the time required for the reduction reactions can be shortened.

Thus, nitrogen compounds contained in for-treatment water discharged from ordinary households, factories and the like can be removed from the for-treatment water efficiently, and efficiency of treatment of the nitrogen compounds is increased.

Further, according to the present invention, in addition to the above inventions, between the cathode and the anode, a shielding member which prevents oxygen bubbles from passing therethrough, protects the anode from an influence of movement of the water and allows ions to pass therethrough is disposed. Accordingly, nitrogen compounds are caused to have a denitrification reaction with active oxygen generated from the anode, and only ions can pass through the shielding member, so that a reduction reaction of a nitrogen compound, nitrate nitrogen in particular, can be accelerated.

Further, according to the present invention, as a conductive material which constitutes the anode, an insoluble material or carbon is used, and an area of the cathode is equal to or larger than an area of the anode. Accordingly, an oxidation reaction of a nitrogen compound produced at the anode, nitrite nitrogen in particular, to nitrate nitrogen is reduced, and along with this, a reduction reaction of nitrate nitrogen produced at the cathode can be accelerated.

Further, according to the present invention, in addition to the above inventions, the for-treatment water is water treated in a biological process purifying vessel. Therefore, to discharge the for-treatment water, COD and BOD are removed from the for-treatment water to a high degree in the biological process purifying vessel such as an activated sludge process vessel, and the for-treatment water is further sterilized with hypochlorous acid or active oxygen for bacteria generated in the activated sludge process vessel.

Further, according to the nitrogen treating system of the present invention, a nitrogen treating apparatus for treating nitrogen compounds in for-treatment water by the above nitrogen treating method is disposed subsequently to a biological process purifying vessel. Therefore, to discharge the for-treatment water, COD and BOD are removed from the for-treatment water to a high degree in the biological process purifying vessel such as an activated sludge process vessel, and the for-treatment water is further sterilized with hypochlorous acid or active oxygen for bacteria generated in the activated sludge process vessel.

## Claims

1. A method for treating nitrogen compounds in for-treatment water by an electrochemical process, wherein as a metal material which constitutes a cathode, a conductive material containing or covered with an element in the group Ib or IIb of the periodic table is used.

2. A method for treating nitrogen compounds in for-treatment water by an electrochemical process, wherein a metal material which constitutes a cathode is a conductive material containing or covered with an element in the group Ib or IIb of the periodic table, and the for-treatment water contains halogen ions or a compound containing halogen ions.

3. A method for treating nitrogen compounds in for-treatment water by an electrochemical process, wherein a metal material which constitutes a cathode is a conductive material containing or covered with an element in the group Ib or IIb of the periodic table, and the for-treatment water contains chloride ions or a compound containing chloride ions.

4. The method of claim 3, wherein an amount of the chloride ions or chloride-ion-containing compound contained in the for-treatment water is not smaller than 10 ppm.

5. The method of claim 1, 2, 3 or 4, wherein as the metal material which constitutes the cathode, an alloy or sintered body comprising copper and zinc, copper and iron, copper and nickel, or copper and aluminum is used.

6. The method of claim 1, 2, 3, 4 or 5, wherein between the cathode and an anode, a shielding member which prevents oxygen bubbles from passing therethrough, protects the anode from an influence of movement of the water and allows ions to pass therethrough is disposed.

7. The method of claim 1, wherein as a conductive material which constitutes the anode, an insoluble material or carbon is used, and an area of the cathode is equal to or larger than an area of the anode.

8. The method of claim 1, 2, 3, 4, 5, 6 or 7, wherein the for-treatment water is water treated in a biological process purifying vessel.

9. A nitrogen treating system in which a nitrogen treating apparatus for treating nitrogen compounds in for-treatment water by the nitrogen treating method of claim 1, 2, 3, 4, 5, 6 or 7 is disposed subsequently to a biological process purifying vessel.

FIG. 1

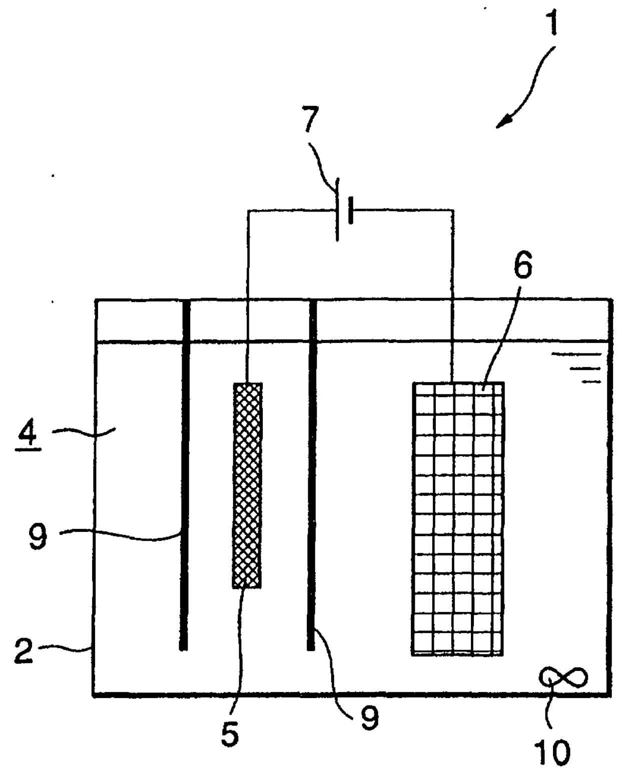


FIG. 2

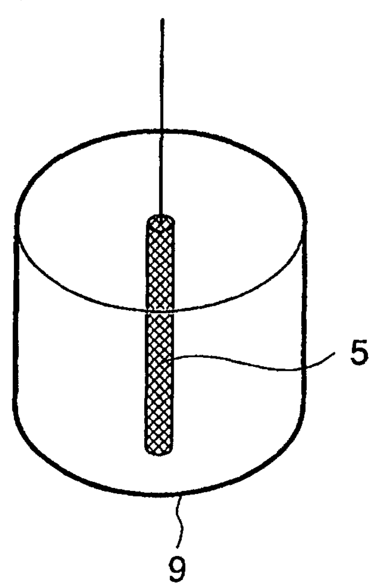

FIG. 3

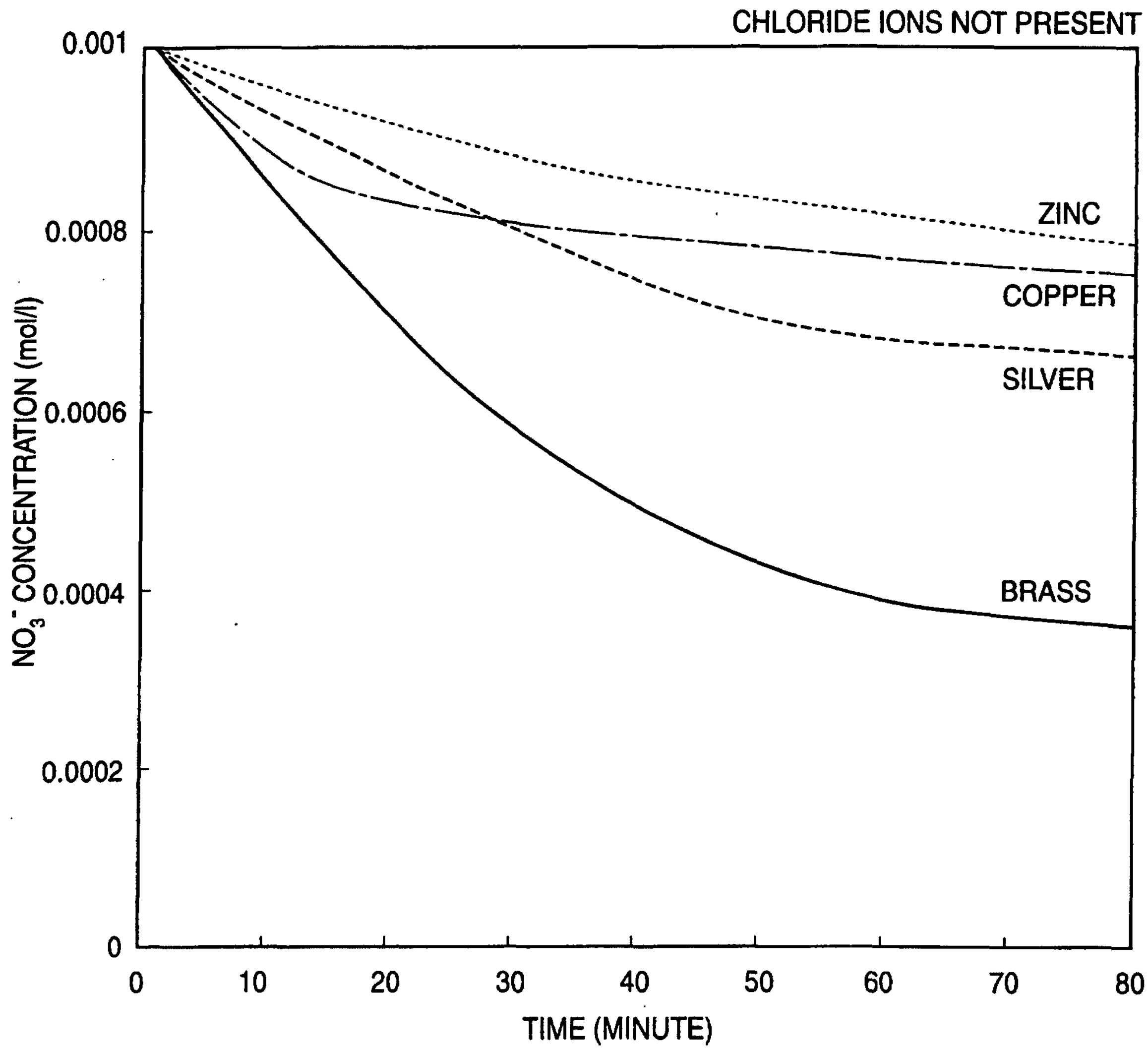
CHLORIDE IONS NOT PRESENT
0.001
0.0008
0.0006
0.0004
0.0002
0
$NO_3^-$ CONCENTRATION (mol/l)
ZINC
COPPER
SILVER
BRASS
0
10
20
30
40
50
60
70
80
TIME (MINUTE)

# FIG. 4

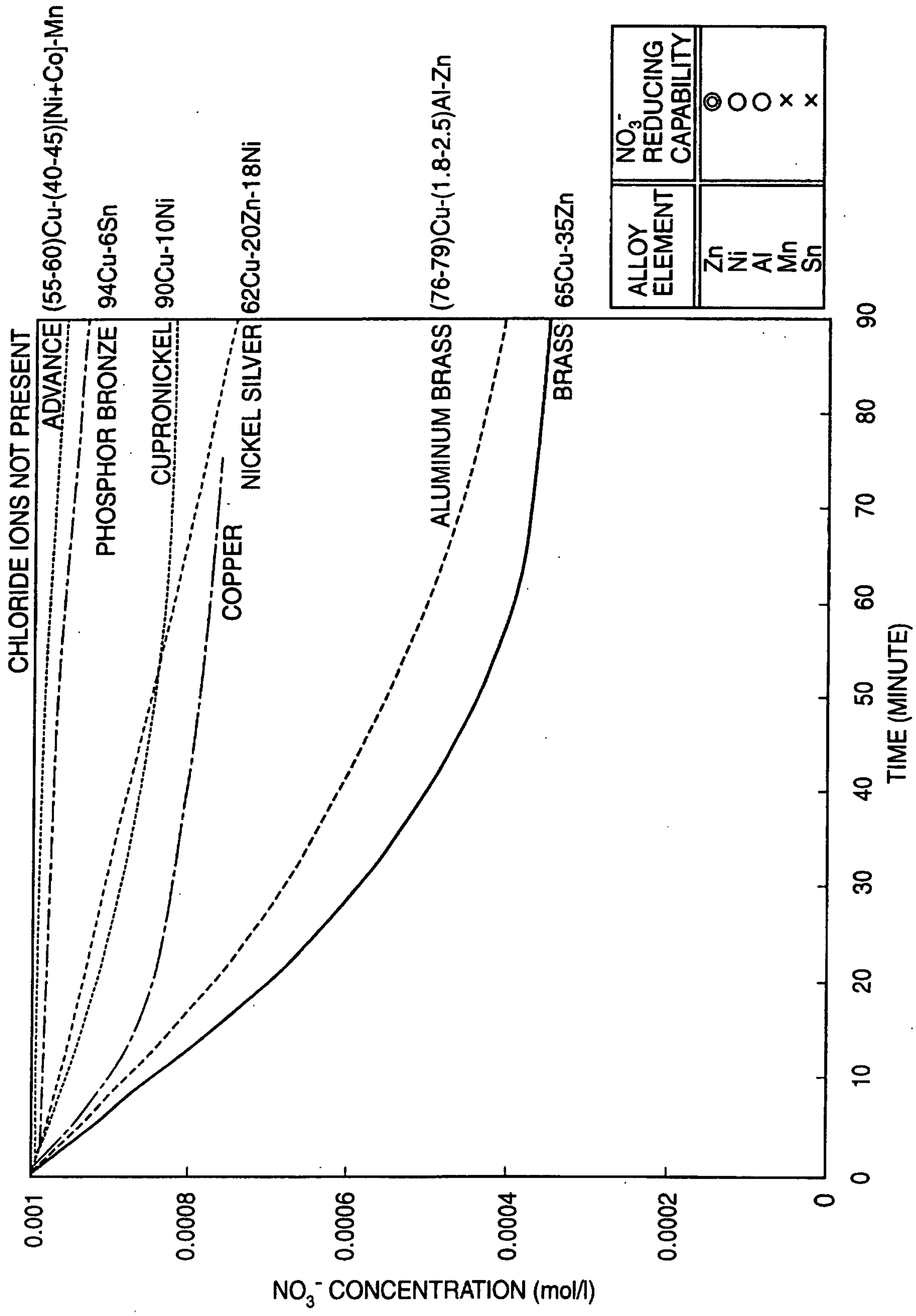
CHLORIDE IONS NOT PRESENT
ADVANCE
(55-60)Cu-(40-45)[Ni+Co]-Mn
PHOSPHOR BRONZE
94Cu-6Sn
CUPRONICKEL
90Cu-10Ni
COPPER
NICKEL SILVER
62Cu-20Zn-18Ni
ALUMINUM BRASS
(76-79)Cu-(1.8-2.5)Al-Zn
BRASS
65Cu-35Zn
ALLOY ELEMENT
$NO_3^-$ REDUCING CAPABILITY
Zn ◎
Ni ○
Al ○
Mn ×
Sn ×
0.001
0.0008
0.0006
0.0004
0.0002
0
$NO_3^-$ CONCENTRATION (mol/l)
0
10
20
30
40
50
60
70
80
90
TIME (MINUTE)

FIG. 5

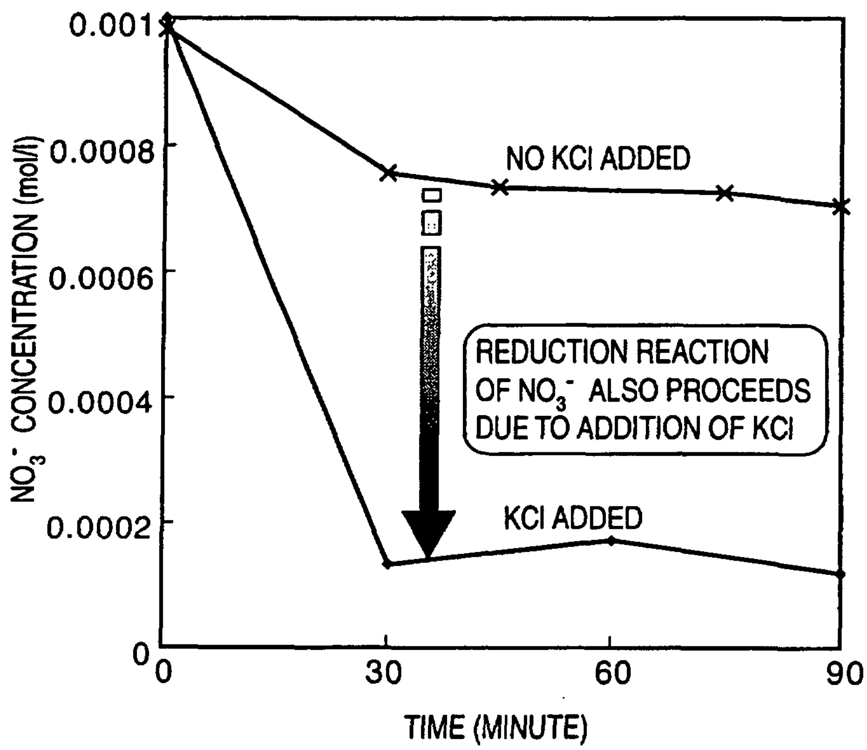
0.001
0.0008
0.0006
0.0004
0.0002
0
$NO_3^-$ CONCENTRATION (mol/l)
0
30
60
90
TIME (MINUTE)
NO KCl ADDED
KCl ADDED
REDUCTION REACTION OF $NO_3^-$ ALSO PROCEEDS DUE TO ADDITION OF KCl

FIG. 6

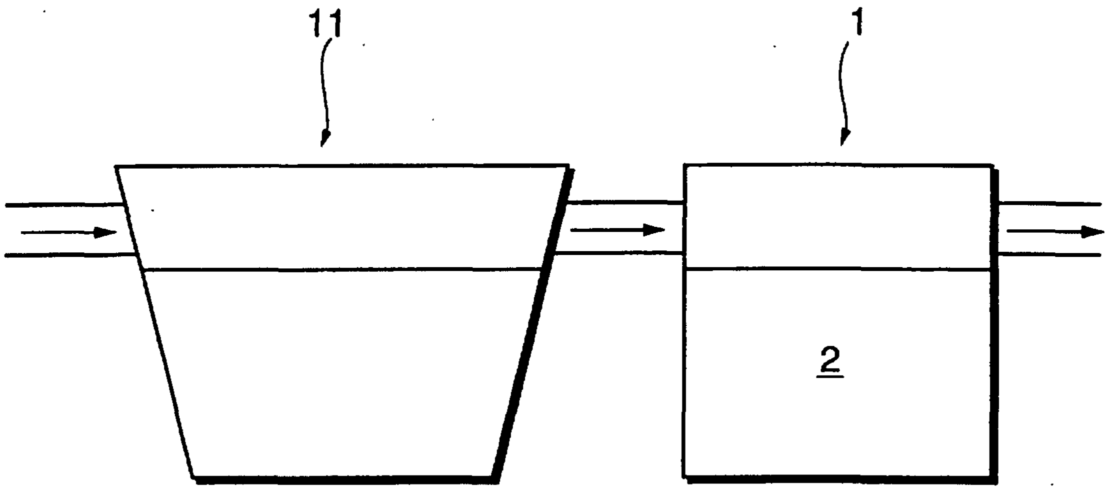


FIG. 7

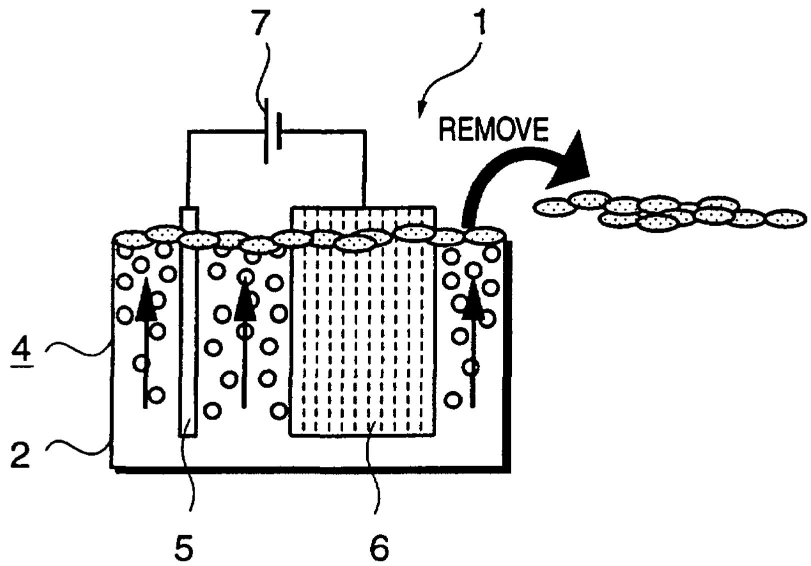

FIG. 8

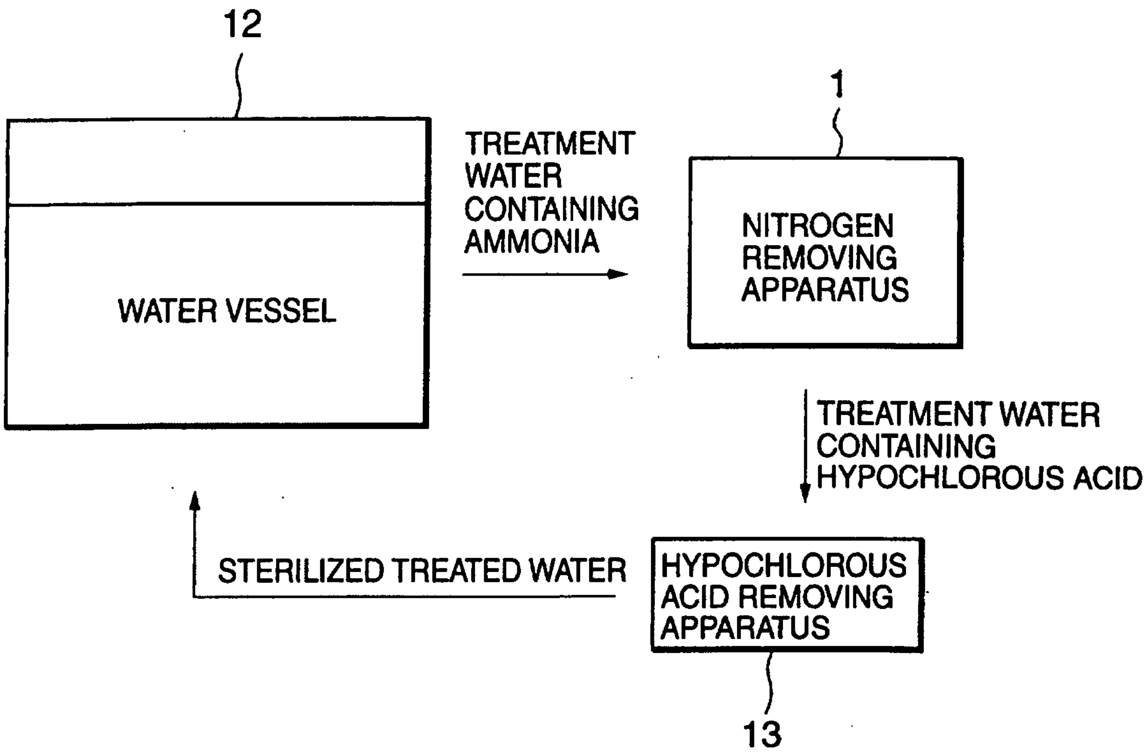
12
1
TREATMENT WATER CONTAINING AMMONIA
WATER VESSEL
NITROGEN REMOVING APPARATUS
TREATMENT WATER CONTAINING HYPOCHLOROUS ACID
STERILIZED TREATED WATER
HYPOCHLOROUS ACID REMOVING APPARATUS
13

FIG. 9

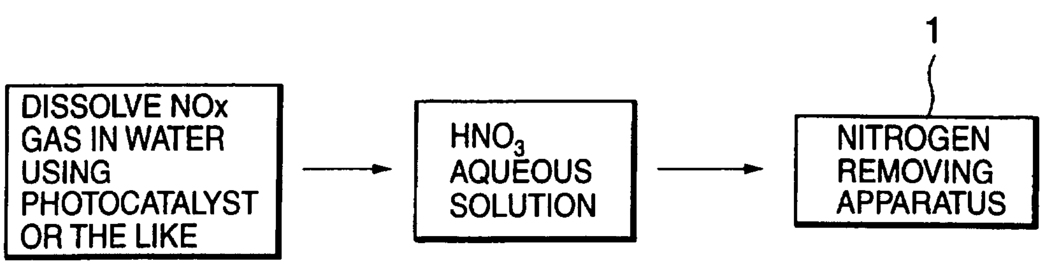
1
DISSOLVE NOx GAS IN WATER USING PHOTOCATALYST OR THE LIKE
HNO3 AQUEOUS SOLUTION
NITROGEN REMOVING APPARATUS

## INTERNATIONAL SEARCH REPORT

International application No.
PCT/JP02/01598

**A. CLASSIFICATION OF SUBJECT MATTER**
Int.Cl$^7$ C02F1/461

According to International Patent Classification (IPC) or to both national classification and IPC

**B. FIELDS SEARCHED**

Minimum documentation searched (classification system followed by classification symbols)
Int.Cl$^7$ C02F1/46-1/469, C02F1/58

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-90448 A (Gakko Hojin Bunri Gakuen), 06 April, 1999 (06.04.99), Full text; Figs. 1 to 2 (Family: none) | 1-4<br>7-9 |
| Y | JP 54-120947 A (Ryoichi ENDO), 19 September, 1979 (19.09.79), Page 1, lower right column, line 14 to page 2, upper right column, line 20 (Family: none) | 7 |
| Y | JP 54-16844 A (Asahi Chemical Industry Co., Ltd.), 07 February, 1979 (07.02.79), Full text (Family: none) | 8,9 |
| X | US 4125445 A (Hercules Inc.), 14 November, 1978 (14.11.78), Full text & GB 1587708 A | 1 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 May, 2002 (17.05.02) | Date of mailing of the international search report<br>04 June 2002 (04.06.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/01598

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2001-252667 A (NKK Corp.),<br>18 September, 2001 (18.09.01),<br>Full text; Fig. 1 (Family: none) | 1-4 |
| A | JP 10-85752 A (NKK Corp.),<br>07 April, 1998 (07.04.98),<br>Full text; Fig. 2 (Family: none) | 1-9 |

Form PCT/ISA/210 (continuation of second sheet) (July 1998)